# EUROPEAN PATENT APPLICATION

(11) **EP 4 385 875 A1**
(43) Date of publication of application: **19.06.2024**
(21) Application number: 23209382.3
(22) Date of filing: 13.11.2023
(51) Int. Cl.: B62M 1/36, B62M 3/06, B62M 1/10

(54) **BICYCLE POWER TRANSMISSION DEVICE**

(30) Priority: 12.12.2022 JP 2022198152
(71) Applicant: Exedy Corporation, Neyagawa-shi, Osaka 572-8570 (JP)
(72) Inventor: KAWAHARA, Yuki, Osaka, 572-8570 (JP); HARIMA, Kenji, Osaka, 572-8570 (JP)
(74) Representative: KASTEL Patentanwälte PartG mbB

(57) **Abstract**

It is intended to provide a bicycle power transmission device enabling stable transmission of torque. The present power transmission device (100) includes an output rotor (2), a pair of first and second input rotors (3a, 3b), an elastic member (4), a sprocket part (6), and a crank arm (7). The output rotor (2) includes a first accommodation portion (21) penetrating therethrough in an axial direction. The pair of first and second input rotors (3a, 3b) includes a pair of second accommodation portions (31a, 31b). The pair of first and second input rotors (3a, 3b) is disposed to interpose the output rotor (2) therebetween in the axial direction. The elastic member (4) is disposed in the first accommodation portion (21) and the pair of second accommodation portions (31a, 31b). The elastic member (4) elastically couples the output rotor (2) and the pair of first and second input rotors (3a, 3b). The sprocket part (6) is provided on the output rotor (2). The crank arm (7) is attached to the first input rotor (3a).

## Description

### CROSS-REFERENCE TO RELATED APPLICATIONS

This application is based on and claims the priority benefit of Japanese application 2022-198152 filed on December 12, 2022, the contents of which are incorporated herein by reference.

### TECHNICAL FIELD

The present invention relates to a bicycle power transmission device.

### BACKGROUND

There has been disclosed a type of bicycle power transmission device configured to be capable of widening a torsion angle, i.e., an angle of torsion (relative rotation) between an input plate and an output plate. For example, Japan Laid-open Patent Application Publication No. 2020-059347 discloses a power transmission device that a pair of output plates are disposed to interpose an input plate therebetween in an axial direction. Besides, elastic members elastically couple the input plate and the pair of output plates. Furthermore, a sprocket part is attached to one of the pair of output plates. A torque is transmitted to a drive wheel through a chain wrapped around the sprocket part.

It is an object of the present invention to provide a bicycle power transmission device enabling stable transmission of torque.

### SUMMARY OF THE INVENTION

A bicycle power transmission device according to a first aspect includes an output rotor, a pair of first and second input rotors, an elastic member, a sprocket part, and a crank arm. The output rotor includes a first accommodation portion penetrating therethrough in an axial direction. The output rotor is disposed to be rotatable. The pair of first and second input rotors includes a pair of second accommodation portions opposed to the first accommodation portion. The pair of first and second input rotors is disposed to interpose the output rotor therebetween in the axial direction. The elastic member is disposed in the first accommodation portion and the pair of second accommodation portions. The elastic member elastically couples the output rotor and the pair of first and second input rotors. The sprocket part is provided on the output rotor. The crank arm is attached to the first input rotor.

According to this configuration, the output rotor, on which the sprocket part is provided, is disposed between the first and second input rotors; hence, stable transmission of torque is enabled. It should be noted that a configuration of the sprocket part provided on the output part is conceptualized to encompass a configuration of the sprocket part provided as a member separated from the output rotor and a configuration of the sprocket part composing a single member together with the output rotor.

A bicycle power transmission device according to a second aspect relates to the bicycle power transmission device according to the first aspect and is configured as follows. The crank arm is spline-coupled to the first input rotor.

A bicycle power transmission device according to a third aspect relates to the bicycle power transmission device according to the first or second aspect and is configured as follows. The crank arm is swaged to the first input rotor. According to this configuration, the crank arm can be easily swaged to the first input rotor. It should be noted that, preferably, after the crank arm is swaged to the first input rotor, the first input rotor is assembled to the second input rotor and the output rotor.

A bicycle power transmission device according to a fourth aspect relates to the bicycle power transmission device according to any of the first to third aspects and is configured as follows. The output rotor includes a hub portion and a flanged portion extending radially outward from the hub portion. The second input rotor is disposed radially outside the hub portion.

A bicycle power transmission device according to a fifth aspect relates to the bicycle power transmission device according to the fourth aspect and is configured as follows. The first input rotor does not overlap with the hub portion in a radial view.

A bicycle power transmission device according to a sixth aspect relates to the bicycle power transmission device according to the fourth or fifth aspect and is configured as follows. The sprocket part overlaps with the second input rotor in the radial view.

A bicycle power transmission device according to a seventh aspect relates to the bicycle power transmission device according to any of the first to sixth aspects and is configured as follows. The output rotor is greater in outer diameter than the second input rotor.

Overall, according to the present invention, stable transmission of torque is enabled.

### BRIEF DESCRIPTION OF THE DRAWINGS

FIG. 1 is a cross-sectional view of a bicycle power transmission device.
FIG. 2 is a front view of the bicycle power transmission device.

### DETAILED DESCRIPTION

A bicycle power transmission device (hereinafter simply referred to as "power transmission device" on an as-needed basis) according to the present preferred embodiment will be hereinafter explained with reference to drawings. It should be noted that in the following explanation, the term "axial direction" refers to an extending direction of a rotational axis O of the power transmission device. On the other hand, the term "circumferential direction" refers to a circumferential direction of an imaginary circle about the rotational axis O, whereas the term "radial direction" refers to a radial direction of the imaginary circle about the rotational axis O. Yet on the other hand, the term "rotational direction" refers to a direction in which the power transmission device is rotated in traveling of a bicycle.

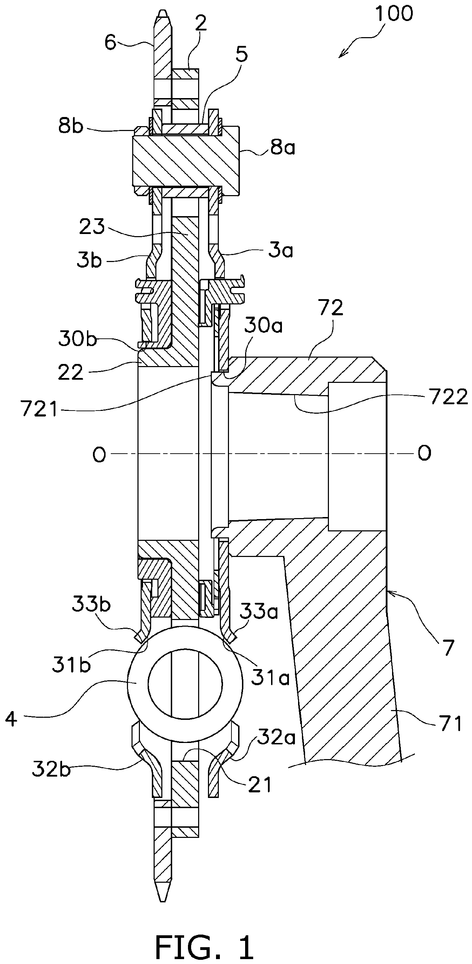

FIG. 1 is a cross-sectional view of a power transmission device 100. As shown in FIG. 1, the power transmission device 100 includes an output rotor 2, first and second input rotors 3a and 3b, a plurality of elastic members 4, a plurality of stopper members 5, a sprocket part 6, a crank arm 7, a plurality of bolts 8a, and a plurality of nuts 8b. The power transmission device 100 is disposed to be rotatable about the rotational axis O.

The power transmission device 100 is installed in a bicycle. For example, the power transmission device 100 is installed in a type of bicycle driven only by a human power without including an electric motor or so forth. It should be noted that the power transmission device 100 may be installed in another type of bicycle including an electric motor. In this case, for instance, the bicycle may have two modes: an electric mode for driving the bicycle only by the electric motor and a human power mode for driving the bicycle only by the human power. It should be noted that the bicycle may have an assist mode for driving the bicycle by both the electric motor and the human power, or alternatively, may not have the assist mode. The power transmission device 100 is configured to transmit a torque, inputted to a pedal (omitted in illustration) attached to a distal end of the crank arm 7, to a drive wheel (omitted in illustration).

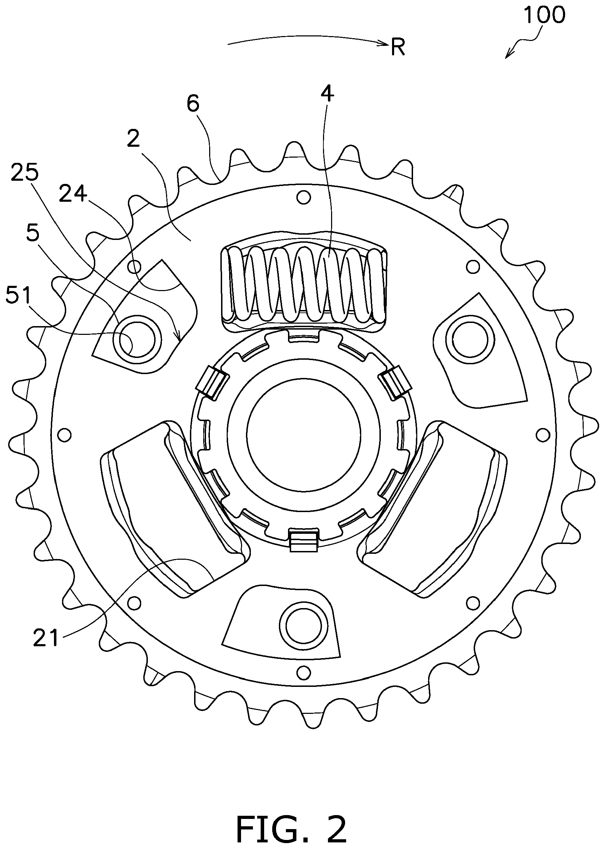

FIG. 2 is a front view of the power transmission device 100 from which some of the elastic members 4, the crank arm 7, and the first input rotor 3a are detached. As shown in FIG. 2, the power transmission device 100 is configured to be rotated in a rotational direction R (clockwise in FIG. 2).

### <Output Rotor>

As shown in FIGS. 1 and 2, the output rotor 2 includes a plurality of first accommodation portions 21. It should be noted that in the present preferred embodiment, the output rotor 2 includes three first accommodation portions 21. The first accommodation portions 21 penetrate the output rotor 2 in the axial direction. The first accommodation portions 21 are disposed at intervals in the circumferential direction. The first accommodation portions 21 are disposed at equal intervals.

The output rotor 2 is disposed to be rotatable in the rotational direction R. The output rotor 2 includes a hub portion 22 and a flanged portion 23. The hub portion 22 is made in shape of a cylinder extending in the axial direction. When the power transmission device 100 is installed in the bicycle, a crankshaft (omitted in illustration) extends inside the hub portion 22.

The flanged portion 23 extends radially outward from the hub portion 22. The flanged portion 23 is provided with the first accommodation portions 21. The flanged portion 23 is provided on an axial end of the hub portion 22.

The output rotor 2 includes a plurality of stopper surfaces 24. When described in detail, the output rotor 2 includes a plurality of through holes 25. The through holes 25 are disposed at intervals in the circumferential direction. Each through hole 25 is disposed between each adjacent pair of first accommodation portions 21 in the circumferential direction. Each through hole 25 penetrates the output rotor 2 in the axial direction. Among inner wall surfaces by which each through hole 25 is defined, a surface facing opposite to the rotational direction R serves as each stopper surface 24.

Each stopper surface 24 faces opposite to the rotational direction R. Each stopper surface 24 is opposed to each stopper member 5 at an interval.

The outer rotor 2 can be made of, for instance, iron, stainless steel, carbon fiber reinforced plastics (CFRP), or so forth. The output rotor 2 is greater in thickness than each of the first and second input rotors 3a and 3b.

### <Input Rotors>

The first and second input rotors 3a and 3b are disposed to be rotatable in the rotational direction R. The first and second input rotors 3a and 3b are disposed to be rotatable relative to the output rotor 2. Each of the first and second input rotors 3a and 3b is lesser in outer diameter than the output rotor 2.

The first and second input rotors 3a and 3b are substantially identical in configuration to each other; hence, detailed explanation will be hereinafter made for the first input rotor 3a but will be omitted for the second input rotor 3b. It should be noted that for differentiation between the first and second input rotors 3a and 3b, "a" is added to the end of a reference numeral assigned to a constituent element related to the first input rotor 3a, whereas "b" is added to the end of a reference numeral assigned to a constituent element related to the second input rotor 3b.

The first and second input rotors 3a and 3b are disposed away from each other at an interval in the axial direction. The output rotor 2 is disposed between the first and second input rotors 3a and 3b. In other words, the first and second input rotors 3a and 3b are disposed to interpose the output rotor 2 therebetween in the axial direction. When described in detail, the flanged portion 23 of the output rotor 2 is disposed between the first and second input rotors 3a and 3b in the axial direction.

The first and second input rotors 3a and 3b are attached to each other by the plural bolts 8a and the plural nuts 8b so as to be detachable from each other. Because of this, the first and second input rotors 3a and 3b are unitarily rotated with each other.

The bolts 8a are configured to attach the first and second input rotors 3a and 3b to each other so as to make the first and second input rotors 3a and 3b detachable from each other. Specifically, each bolt 8a is screwed into each nut 8b, while penetrating each of holes provided in each of the first and second input rotors 3a and 3b in the axial direction. When each bolt 8a is unscrewed from each nut 8b, the first and second input rotors 3a and 3b are made detachable from each other. Then, when each bolt 8a is screwed into each nut 8b, the first and second input rotors 3a and 3b, detached from each other, are again made easily attachable to each other.

The stopper members 5 are disposed between the first and second input rotors 3a and 3b in the axial direction. The stopper members 5 are disposed in the through holes 25 of the output rotor 2, respectively. The stopper members 5 are attached to the first and second input rotors 3a and 3b so as to be unitarily rotated therewith.

When a torsion angle, i.e., an angle of torsion (relative rotation) between the output rotor 2 and the first and second input rotors 3a and 3b, reaches a predetermined angle in traveling of the bicycle, the stopper surfaces 24 contact with the stopper members 5, respectively. Thus, when the stopper members 5 contact with the stopper surfaces 24, respectively, the first and second input rotors 3a and 3b are restricted from rotating relative to the output rotor 2 any further from the positions. In other words, the first and second input rotors 3a and 3b are rotated relative to the output rotor 2 until the stopper members 5 contact with the stopper surfaces 24, respectively. Then, the first and second input rotors 3a and 3b are unitarily rotated with the output rotor 2 after the stopper members 5 contact with the stopper surfaces 24, respectively. It should be noted that the torsion angle between the output rotor 2 and the first and second input rotors 3a and 3b is maximized (hereinafter referred to as "maximum torsion angle") when the stopper surfaces 24 contact with the stopper members 5, respectively. It should be also noted that the torsion angle between the output rotor 2 and the first and second input rotors 3a and 3b is 0 degrees when the torque is not being inputted to the power transmission device 100.

The stopper members 5 are attached to the first and second input rotors 3a and 3b so as to be replaceable by any suitable type of stopper members. Specifically, each stopper member 5 includes a through hole 51 penetrating therethrough in the axial direction. Each bolt 8a extends to penetrate inside the through hole 51 of each stopper member 5. When each bolt 8a is unscrewed from each nut 8b and is detached from the first and second input rotors 3a and 3b and each stopper member 5 and then one of the first and second input rotors 3a and 3b is detached from the other, each stopper member 5 is made replaceable by another stopper member. It should be noted that a type of stopper members is selectable as the stopper members 5 used in the power transmission device 100 from, for instance, a plurality of types of stopper members different in circumferential dimension from each other. When described in detail, a type of stopper members is selectable as the stopper members 5 from a plurality of types of stopper members different in outer diameter from each other. When each stopper member 5 is replaced by another stopper member as described above, a distance between each stopper surface 24 and each stopper member 5 is changed, whereby the maximum torsion angle between the output rotor 2 and the first and second input rotors 3a and 3b can be changed.

The first input rotor 3a has a disc shape and includes a spline hole 30a penetrating a middle part thereof in the axial direction. The second input rotor 3b includes a through hole 30b instead of the spline hole 30a. The through hole 30b of the second input rotor 3b is greater in diameter than the spline hole 30a of the first input rotor 3a. In other words, the second input rotor 3b is greater in inner diameter than the first input rotor 3a.

The hub portion 22 of the output rotor 2 extends inside the through hole 30b of the second input rotor 3b in the axial direction. In other words, the second input rotor 3b is disposed radially outside the hub portion 22. The second input rotor 3b overlaps with the hub portion 22 in a radial view. On the other hand, the hub portion 22 of the output rotor 2 does not extend inside the spline hole 30a of the first input rotor 3a. In other words, the first input rotor 3a does not overlap with the hub portion 22 in the radial view.

The first input rotor 3a includes a plurality of second accommodation portions 31a. It should be noted that in the present preferred embodiment, the first input rotor 3a includes three second accommodation portions 31a. The second accommodation portions 31 are disposed at intervals in the circumferential direction.

Each second accommodation portion 31a penetrates the first input rotor 3a in the axial direction. Each second accommodation portion 31a extends in the circumferential direction. The second accommodation portions 31 are substantially disposed on an identical imaginary circle. The second accommodation portions 31a are disposed to be axially opposed to the first accommodation portions 21, respectively. Put differently, in an axial view, the second accommodation portions 31a are disposed to overlap with the first accommodation portions 21, respectively.

The first input rotor 3a includes first cut-and-raised portions 32a and second cut-and-raised portions 33a. The first and second cut-and-raised portions 32a and 33a are formed by cutting and raising the first input rotor 3a in part.

Each first cut-and-raised portion 32a is disposed radially outside each elastic member 4. Each second cut-and-raised portion 33a is disposed radially inside each elastic member 4. Each pair of first and second cut-and-raised portions 32a and 33a is configured to restrict axial movement of each elastic member 4.

The first input rotor 3a can be made of, for instance, iron, stainless steel, carbon fiber reinforced plastics (CFRP), or so forth.

### <Elastic Members>

Each of the elastic members 4 is accommodated in each first accommodation portion 21 and each pair of second accommodation portions 31a and 31b. The elastic members 4 are, for instance, coil springs. The elastic members 4 elastically couple the output rotor 2 and the first and second input rotors 3a and 3b in the rotational direction. In other words, the torque, outputted from the first and second input rotors 3a and 3b, is transmitted to the output rotor 2 through the elastic members 4. Besides, the elastic members 4 are rotated together with the output rotor 2 and the first and second input rotors 3a and 3b. When the torque is transmitted, the elastic members 4 are compressed, whereby torsion (relative rotation) is caused between the output rotor 2 and the first and second input rotors 3a and 3b. When the elastic members 4 are not being compressed, torsion is not caused between the output rotor 2 and the first and second input rotors 3a and 3b; hence, the torsion angle is 0 degrees.

### <Sprocket Part>

The sprocket part 6 is provided on the output rotor 2. For example, the sprocket part 6 is provided as a member separated from the output rotor 2 and is attached to the output rotor 2 by bolts, rivets, or so forth. The sprocket part 6 is unitarily rotated with the output rotor 2. The sprocket part 6 includes a plurality of teeth on the outer peripheral end thereof. A chain (omitted in illustration) is wrapped around the sprocket part 6, whereby the torque is transmitted from the sprocket part 6 to the drive wheel (omitted in illustration) through the chain and so forth.

The sprocket part 6 has an annular shape. The inner peripheral surface of the sprocket part 6 is opposed to the outer peripheral surface of the second input rotor 3b. In other words, the sprocket part 6 overlaps with the second input rotor 3b in the radial view.

### <Crank Arm>

The crank arm 7 is configured to be unitarily rotated with the first input rotor 3a. In other words, the crank arm 7 is disposed to be rotatable about the rotational axis O. The crank arm 7 is attached to the first input rotor 3a. When described in detail, the crank arm 7 is configured to be spline-coupled to the first input rotor 3a.

The crank arm 7 includes an arm body 71 and an attachment portion 72. The arm body 71 extends in a radial direction. The attachment portion 72 extends from one of both ends of the arm body 71 in the axial direction. It should be noted that the pedal (omitted in illustration) is attached to the other of both ends of the arm body 71.

The outer diameter of the attachment portion 72 is lesser in a distal end 721 than in the remaining part thereof. The distal end 721 is spline-coupled to the first input rotor 3a. Besides, the distal end 721 penetrates the first input rotor 3a in the axial direction. Then, the distal end 721 is fixed to the first input rotor 3a by swaging. When described in detail, the distal end 721 and the first input rotor 3a are firmly attached to each other by swaging of the distal end 721. Moreover, a part of the distal end 721, protruding from the first input rotor 3a, is enlarged in outer diameter by swaging; namely, the outer diameter of the protruding part is made greater than the inner diameter of the first input rotor 3a. As a result, the distal end 721 is prevented from being detached from the first input rotor 3a; hence, the crank arm 7 and the first input rotor 3a can be prevented from moving away from each other to the opposite sides in the axial direction.

It should be noted that the distal end 721 of the attachment portion 72 does not extend to reach the output rotor 2 in the axial direction. In other words, the attachment portion 72 and the output rotor 2 do not overlap with each other in the radial view.

The attachment portion 72 includes an attachment hole 722. The attachment hole 722 has a rectangular shape in the axial view. The crankshaft (omitted in illustration) is fitted to the attachment hole 722, whereby the crank arm 7 is unitarily rotated with the crankshaft.

### <Actions>

The action of the power transmission device 100 configured as described above will be explained. First, when a torque is inputted to the first and second input rotors 3a and 3b through the crank arm 7 by pedaling of a user, the first and second input rotors 3a and 3b are rotated in the rotational direction R. Then, the torque is transmitted from the first and second input rotors 3a and 3b to the output rotor 2 through the elastic members 4. As a result, the output rotor 2 is rotated in the rotational direction R, whereby the torque is transmitted to the drive wheel.

Here, when the torsion angle between the output rotor 2 and the first and second input rotors 3a and 3b reaches a predetermined angle by compression of the elastic members 4, the stopper surfaces 24 contact with the stopper members 5, respectively. As a result, the output rotor 2 and the first and second input rotors 3a and 3b are unitarily rotated. The maximum torsion angle can be changed by replacement of the stopper members 5. For example, when the stopper members 5 are replaced by a type of stopper members having a greater outer diameter than the stopper members 5, the maximum torsion angle can be made small. Contrarily, when the stopper members 5 are replaced by another type of stopper members having a lesser outer diameter than the stopper members 5, the maximum torsion angle can be made large. It should be noted that in the power transmission device 100, the torsion angle is configured to be maximized before the elastic members 4 are fully compressed.

Each elastic member 4 is preferably set to have a spring constant, by which the torsion angle between the output rotor 2 and the first and second input rotors 3a and 3b is maximized when a torque of 100 N·m or less is inputted to the first and second input rotors 3a and 3b. Besides, each elastic member 4 is preferably set to have a spring constant, by which the torsion angle between the output rotor 2 and the first and second input rotors 3a and 3b is maximized when a torque of 20 N·m or greater is inputted to the first and second input rotors 3a and 3b. It should be noted that the torque, inputted to the first and second input rotors 3a and 3b when the torsion angle is maximized, will be referred to as "maximum torque". Now, a variety of types of elastic members are prepared as options for the elastic members 4. For example, the variety of types of elastic members are set to be different in spring constant from each other so as to maximize the torsion angle when the magnitude (N·m) of the maximum torque is approximately each of the following values (albeit not particularly limited thereto): 90, 80, 70, 60, 50, 40, and 30. Then, any of the variety of types of elastic members may be configured to be arbitrarily selected by the user as the elastic members 4.

### [Modifications]

One preferred embodiment of the present invention has been explained above. However, the present invention is not limited to the above, and a variety of changes can be made without departing from the gist of the present invention. It should be noted that basically speaking, respective modifications to be described are applicable simultaneously.
(a) In the preferred embodiment described above, the sprocket part 6 is provided as a member separated from output rotor 2; however, the sprocket part 6 is not limited in configuration to this. For example, the sprocket part 6 may be provided on the output rotor 2 so as to be integrated with the outer peripheral end thereof. In other words, the sprocket part 6 may compose a single member together with the output rotor 2. When described in detail, the output rotor 2 may be provided with a plurality of teeth on the outer peripheral end thereof such that the outer peripheral end provided with the teeth serves as the sprocket part 6.
(b) In the preferred embodiment described above, the crank arm 7 is fixed to the first input rotor 3a by spline-coupling; however, the crank arm 7 may be fixed to the first input rotor 3a by another method. For example, the crank arm 7 may be attached to the first input rotor 3a by bolts and/or so forth.
(c) In the preferred embodiment described above, the sprocket part 6 is disposed to overlap with the second input rotor 3b in the radial view; however, the sprocket part 6 is not limited in layout to this. For example, the sprocket part 6 may be disposed to overlap with the first input rotor 3a in the radial view.

### LIST OF REFERENCE NUMERALS

2: Output rotor, 21:First accommodation portion, 22: Hub portion, 23: Flanged portion, 3a: First input rotor, 31a: Second accommodation portion, 3b: Second input rotor, 31b: Second accommodation portion, 4: Elastic member, 6: Sprocket part, 7: Crank arm, 100: Power transmission device

## Claims

1. A bicycle power transmission device comprising:
an output rotor including a first accommodation portion penetrating therethrough in an axial direction, the output rotor disposed to be rotatable;
a pair of first and second input rotors including a pair of second accommodation portions opposed to the first accommodation portion, the pair of first and second input rotors disposed to interpose the output rotor therebetween in the axial direction;
an elastic member disposed in the first accommodation portion and the pair of second accommodation portions, the elastic member elastically coupling the output rotor and the pair of first and second input rotors;
a sprocket part provided on the output rotor; and
a crank arm attached to the first input rotor.

2. The bicycle power transmission device according to claim 1, wherein the crank arm is spline-coupled to the first input rotor.

3. The bicycle power transmission device according to claim 1 or 2, wherein the crank arm is swaged to the first input rotor.

4. The bicycle power transmission device according to claim 1, wherein
the output rotor includes a hub portion and a flanged portion, the flanged portion extending radially outward from the hub portion, and
the second input rotor is disposed radially outside the hub portion.

5. The bicycle power transmission device according to claim 4, wherein the first input rotor does not overlap with the hub portion in a radial view.

6. The bicycle power transmission device according to claim 4 or 5, wherein the sprocket part overlaps with the second input rotor in a radial view.

7. The bicycle power transmission device according to claim 1, wherein the output rotor is greater in outer diameter than the second input rotor.
